# EUROPEAN PATENT SPECIFICATION

(11) **EP 0 973 019 B1**
(45) Date of publication and mention of the grant of the patent: **27.03.2002**
(21) Application number: 99305493.1
(22) Date of filing: 12.07.1999
(51) Int. Cl.: G01J 5/60

(54) **Multi-array sensor and method of identifying events using the same**
Sensor mit mehreren Arrays und Verfahren zur Identifizierung von Ereignissen in dem er benützt wird
Capteur à plusieurs matrices et méthode pour identifier des événements utilisant un tel capteur

(30) Priority: 14.07.1998 GB 9815306
(43) Date of publication of application: 19.01.2000
(73) Proprietor: INFRARED INTEGRATED SYSTEMS LTD., Towcester, Northants NN12 6AD (GB)
(72) Inventor: Porter, Stephen George, Towcester,Northants NN12 6EJ (GB); Wilson, Bryan Lorrain Humphreys, Towcester,Northants NN12 8PU (GB)
(74) Representative: Dawson, Elizabeth Ann

(56) References cited:
- EP-A- 0 168 235
- EP-A- 0 536 727
- WO-A-93/18494
- FR-A- 2 501 370
- US-A- 5 157 258
- US-A- 5 591 975

## Description

The present invention relates to a sensor for viewing a scene including detectors responsive to radiation at different wavelengths.

It is well known that the temperature of a distant object may be determined by measuring the ratio of its emission at two different wavelengths by means of a detector or detectors onto which an image is focussed. Conveniently the detector or detectors can be limited to two different wave bands. There are well known limitations to the accuracy of such a measurement, such as the proviso that the body must be approximately a black body in those regions of the spectrum, or at least have a known emission spectrum. By contrast where an object only emits over a limited spectral range or ranges, such as do many gases in the region 2 µm-10 µm, deductions about the nature of the body can be made. For example if the body is a gas such as carbon dioxide and the wave band is selected to be in its absorption band, the emission is a function of its temperature and concentration. Those conclusions can be reinforced by comparing the response with a detector operating in a band where the object does not emit strongly.

However while these methods are of use in determining the composition or temperature of uniform objects and are used in radiation thermometers, gas measurement systems and flame detectors, they are of limited use in determining the nature of events occurring in complex scenes.

FR-A-2501370 describes a sensor of the type defined in the preamble of claim 1. Its purpose is to determine the temperature of hot objects and it is not intended to identify dynamic events.

One aspect of the present invention provides a sensor comprising:
two or more sensor means which have different wavelength responses and means for focussing radiation from a scene simultaneously onto all or both of the sensor means;
means for comparing the amplitude of signals from areas of the sensors corresponding to the same part of the scene so as to provide a wavelength analysis of radiation from the scene; and
means for analysing the locations and spatial characteristics of a scene on the basis of signals from the arrays;
characterised in that the sensor means comprise detector arrays; said comparing means compares the amplitude of signals from elements of the arrays corresponding to the same part of the scene, and the apparatus further comprises means for analysing the time sequence of signals from elements of the arrays; and means for identifying an event on the basis of the wavelength, spatial and time sequence analyses.

Another aspect of the invention provides a method of identifying significant events in a scene using a sensor comprising two or more detector arrays which have different wavelength responses and means for focussing radiation from the same scene simultaneously onto the arrays, the method comprising the steps of:
comparing the amplitudes of signals from elements of the arrays corresponding to the same part of the scene so as to provide a wavelength analysis of radiation from the scene;
analysing the locations and spatial characteristics of events within the scene on the basis of signals from elements of the arrays;
analysing the time sequence of signals from elements of the arrays; and identifying an event on the basis of the wavelength, spatial and time sequence analyses.

The method of the invention can be regarded as monitoring events in a viewed scene in three or four dimensions: one or two in space, one in time and one in wave-length. The wave-length discrimination may be accomplished by the application of one or more optical filters to one or more detector arrays on to which is imaged the same scene. For example a band pass filter covering 8-14 µm may be used for one detector array and another covering 3-5 µm may be used for another array. Objects with a temperature near 300K may be detected preferentially by the first detector array and objects with a temperature of 800K preferentially by the second. In one possible arrangement one array may be used without a filter while a second with a band pass filter centered around 2.5 µm will show preferential response to objects with temperatures around 1300K. Alternatively the second array may have a band pass filter centered on a wavelength within the range 4-5µm and will show preferential response to warm carbon dioxide and/or carbon monoxide characteristic of many fires.

A single scene in which it is desired to detect the occurrence of events is focused on to two, or possibly more, detector arrays. The detector arrays should be mounted sufficiently close to each other and/or have an arrangement of lenses or other optical means so that substantially the same scene is incident on each array. For the purposes of exposition we may suppose that each detector array has the same number of elements, though this is not a limitation to the invention. The arrays will frequently be rectangular or square arrays, ie. 4 x 4 or more detector elements with the numbers of detectors in each side of the rectangle not greatly disparate, corresponding to the size of common scenes in which it is desired to detect significant events. Typically an array will contain 10-10,000 elements, preferably between 64 and 1024 elements. For some scenes, however, linear arrays of detectors eg. rows of detectors are sufficient. The arrays may each use independent beams from the scene, or share a common beam by means of an optical beam splitter. Where it may be desired to place the detector arrays in a package or packages which may be sealed against the ingress of undesired contaminants, for example moisture, the package must contain a window; the lens itself may be the window. Where the lens does not form the window it is possible to share a common window by means of a beam splitter, such as a half silvered mirror.

In one possible embodiment of the invention each detector array (for example a pyroelectric array) is mounted directly onto a respective integrated circuit which processes the signals from the array. In this case a plurality of mechanical and electrical connections is made between the individual elements of the array and the corresponding inputs of the integrated circuit. Alternatively, two or more arrays may be mounted onto the same substrate or integrated circuit. In this case, the two or more arrays may be mounted side by side, or the elements of the detector arrays may alternate with one another for example in a chequer board or similar arrangement, or alternatively may be interdigitated with one another. In an alternating or interdigitated arrangement only a single optical system is needed, but it is desirable that the resolution of the optical system is low enough that when a point source is imaged it falls onto one or more elements of all of the arrays. Such a condition can be achieved for example by slightly defocusing the optical system.

Whatever the arrangement, one array may for example be discriminated from another by the application of a filter.

The signals from each of the detector arrays are monitored. Preferably a threshold is set for one or more arrays such that a signal above the defined threshold corresponds to a possibly significant event in the element of the scene corresponding to that detector. Under normal conditions only one or a small number of elements will show signals above threshold. For each such element an analogue measurement may be made of the signals selected arrays and the ratio or ratios of the signals from corresponding elements in the arrays is determined. Measurements may also be made of the ratio(s) for detectors near to those above threshold. The values of these ratios are characteristic of events within the scene and by the choice of appropriate filters can be used to recognise events, for example a fire, through temperature changes or through the detection of hot gases or the movement of objects within the scene. The relative locations of signals exceeding the threshold may be analysed to indicate the spatial extent of the event and hence assist in its identification. Other spatial characteristics such as aspect ratio may be analysed. Furthermore, analysis of the absolute locations of above threshold signals in a scene will also assist in identifying an event.

The time sequence of above threshold events can give further information about the events, the spread of a fire or potential fire or the movement of hot gases across the scene. If all the signals come from objects near ambient temperature, the time sequence may show movement across the scene with a speed consistent with an intruder, or they may appear randomly in the scene and be consistent with the movement for example of trees in the wind. The whole process may be controlled by a microprocessor, possibly in conjunction with analogue signal processing elements and analogue to digital converters. The system allows separate alarm signals to be generated for a fire or an intruder and discriminates against above threshold signals that are not associated with an alarm condition, such as sunlight or the warming of a radiator. If desired different thresholds may be set for different parts of the scene, for example where there is a radiator or a window.

Compared with systems which use wavelength discrimination with a single pair of detectors, the method of the invention has the advantage that the signal comparisons are characteristic not of the whole scene but of different parts of the viewed scene and thus give better discrimination. Furthermore the movement of above threshold signals and their corresponding ratio in one or more spatial dimensions may be followed to confirm the presence of a fire, of hot gases or of an intruder.

These examples illustrate how the performance of two or more detectors arrays operating in different wave bands simultaneously is superior to a single detector array operating in a single waveband, or a pair of detectors operating in two wave bands onto which the whole scene is focused. The superior performance is obtained by the simultaneous acquisition and processing of data from one or two dimensions of space as well as the dimensions of wavelength and time. This is achieved by processing the sequential data from two or more detector arrays, using one or more processors and memory. Where an alarm or other event of importance is suspected it is possible to limit the information being processed to a restrictive set of elements at or near the site of the event suspected, in order to obtain more detailed information about the event.

An embodiment of the invention will now be described by way of example only and with reference to the accompanying drawings in which:
Figure 1 illustrates a first sensor according to the invention including two detector arrays;
Figure 2 illustrates a second sensor according to the invention in which a beam splitter is used to direct radiation to two detector arrays;
Figure 3 illustrates a third sensor according to the invention; and
Figures 4a, 4b and 4c show a fourth sensor according to the invention in which the detector arrays are mounted on a die: Figure 4a is an enlarged side elevation showing the mounting arrangement, Figure 4b is a partial plan view of the detector array and Figure 4c shows the array mounted in a package with other components.

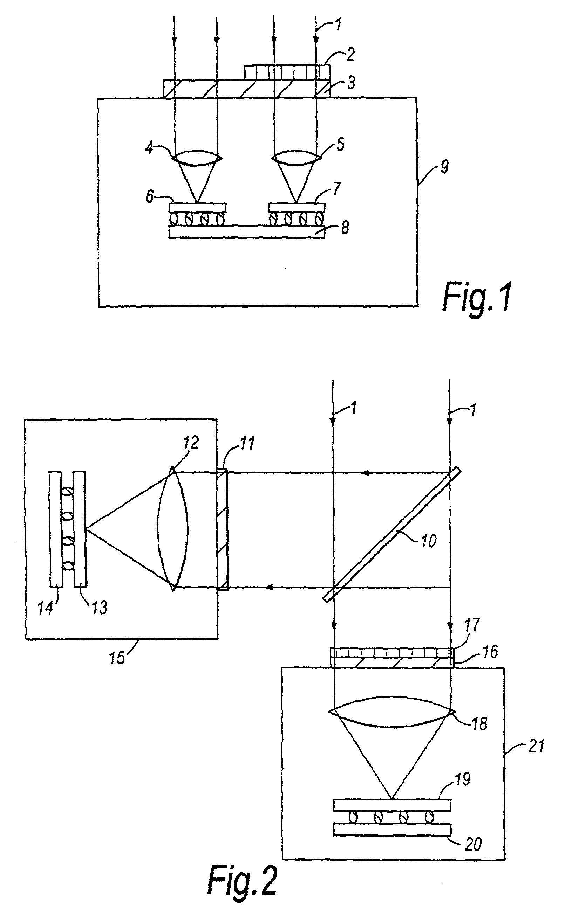

Figure 1 shows two pyroelectric detector arrays 6, 7 mounted in a common package 9 containing a window 3. Thermal radiation 1 from the scene where events are to be analysed is focused onto the detector arrays 6 and 7 by lenses 4 and 5. The detector arrays 6 and 7 have different wave-length responses. In the example illustrated detector 6 has a wide band response and detector 7 has a response limited by a band pass filter 2 which is here shown deposited on the window 3 in the package 9. In other embodiments of the invention, bandpass filters may be associated with both detector arrays. The pyroelectric detectors make a plurality of mechanical and electrical connections to one or more silicon integrated circuits 8 . This circuit or circuits process the signals from both arrays and is connected to one or more other processors, not shown.

Figure 2 shows a related arrangement in which thermal radiation 1 from the scene is divided by a beam splitter, which in this example is a half silvered mirror 10. The word half silvered conventionally describes the function but the material used is not limited to silver and a thin film of nichrome can be used for example. The radiation then passes through separate windows 11 and 16 in separate packages 15 and 21, and is focused by lenses 12 and 18 onto detector arrays 13 and 19. Each array in this illustration is connected by a plurality of connections to integrated circuits 14 and 20, which may in turn be connected to another processor or processors. In the example illustrated the response of one array is restricted by a bandpass filter 17.

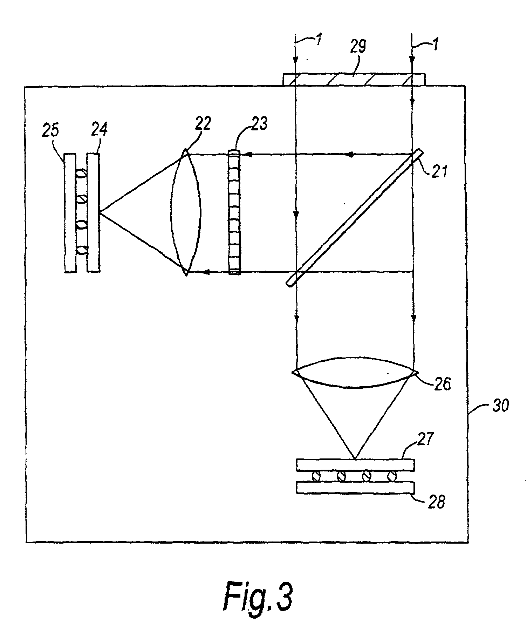

Figure 3 shows a modification to the arrangement of Figure 2 in which the half silvered mirror 21 is brought inside a single package 30 with a common window 29. Lenses 22 and 26 focus the light on to pyroelectric arrays 24 and 27 which are mounted on integrated circuits 25 and 28. The response of array 24 is limited by a bandpass filter 23.

An alternative possibility is to use a dichroic mirror instead of the half silvered mirror 10 or 21. This will reflect one range of wavelengths but transmit a different range of wavelengths. In this case there is no need for the filter 17 or 23.

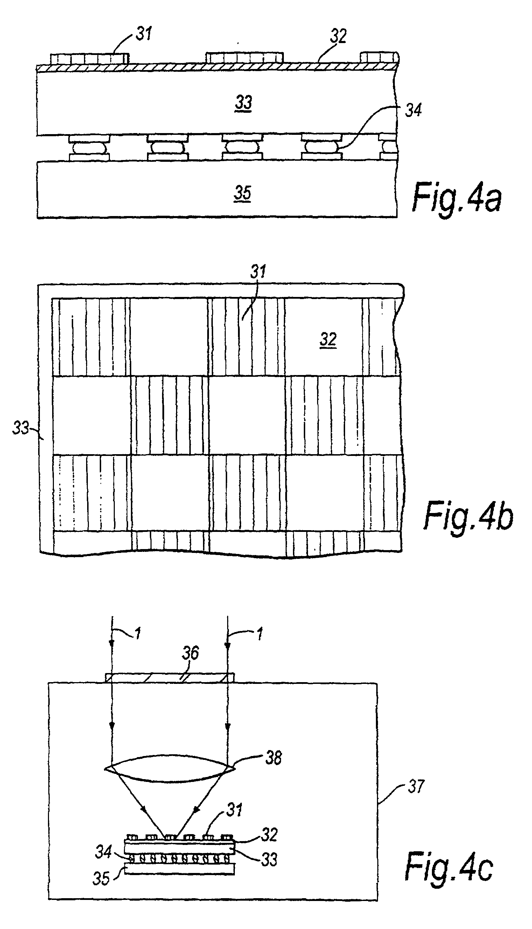

Figures 4a, 4b and 4c show an arrangement in which the detector arrays are configured on a single pyroelectric ceramic die 33 which is mounted on, and makes a plurality of interconnections 34 to, a single integrated circuit 35. The top surface of the ceramic in the section Figure 4a has a common electrode 32. The different arrays are defined by the presence or absence of filters which are placed above alternate elements of the array. The filters are such that they reflect thermal radiation which is not in the defined passband. The filters 31 are shown in Figure 4a to be present on alternate elements of the array and in this instance are shown integral with the ceramic; it may however be placed on a transparent substrate immediately above the ceramic. Figure 4b shows the disposition of these filters in a chequerboard in two dimensions. Figure 4c shows how such an array requires only one lens 38 and one window 36 in a single package 37. In this configuration the resolution of the lens should be such that adjacent elements with and without the filters see approximately the same part of the scene so that signals from the two arrays defined by the chequerboard arrangement are comparable. This can be achieved for example by defocusing the lens.

Several arrays can be alternated or interdigitated in this way.

Whatever arrangement of detector arrays is used, the signals are processed in a similar manner. A threshold for the magnitude of the signals is set for one or both arrays, such that signals above this level are examined for significant events. When an above threshold signal corresponding to a particular element of the scene occurs, a measurement is made of the ratio of the signals from the corresponding elements from the two arrays . The same measurement may also be made on detectors corresponding to adjacent elements of the scene. As this measurement is typically only made on one or a few elements it may be accomplished economically and in a timely fashion in comparison with a measurement of the ratio for all the scene elements. The values of this ratio are stored and compared in the processor with that which obtains when there are no significant events. The evolution of signals above threshold and their corresponding ratios is then measured and stored. The processor can then make a decision on the nature of the event.

The decision process depends on the wavelength selectivity of the arrays. If one of the detector arrays is sensitive only in the emission region of a hot gas, notably oxides of carbon, and the other array has wide band sensitivity, then a comparatively large ratio of the signal from an element of the former array to that of a corresponding element of the latter indicates the presence of the hot gas and its spread for example by convection may be followed to neighbouring elements. The value of the ratios may be used to give a measure of the concentration of hot gas. The relative sensitivity to hot gases may be enhanced by incorporating a second filter, over window 11 in Fig. 2 for example, which rejects the wavelength characteristic of emission from these gases. The time sequence of the values of this ratio may show low frequency fluctuations associated with the presence of flames. A small value of this ratio may indicate heating without the presence of the hot gas, or the presence of an intruder, or be associated with non-significant events such as the movement of trees. The time sequence of above threshold events may enable events such as these to be distinguished. An intruder will move across adjacent elements of the scene, usually horizontally, a fire spreads across several elements of the scene, while random above threshold events which do not recur may be judged of no significance.

If the two detector arrays are limited by band pass filters, but one has a shorter wavelength response than the other, a comparatively large ratio of the signal from one element of the short wavelength array to the corresponding signal from the longer wavelength array will indicate the presence of a hot body. The value of this ratio will be associated with the temperature of that element of the scene, If this is associated with a fire significant events with a similar ratio will spread to adjoining elements. On the other hand smaller values of this ratio may be associated with an intruder or with non-significant events. The time sequence of such above threshold events is then examined as described in the preceding paragraph to distinguish these possibilities.

## Claims

1. A sensor comprising:
two or more sensor means (6,7;13,19;24;27) which have different wavelength responses and means (4,5;12,18;22,26;38) for focussing radiation from a scene simultaneously onto all or both of the sensor means;
means for comparing the amplitude of signals from areas of the sensors corresponding to the same part of the scene so as to provide a wavelength analysis of radiation from the scene; and
means for analysing the locations and spatial characteristics of a scene on the basis of signals from the arrays;
**characterised in that** the sensor means comprise detector arrays; said comparing means compares the amplitude of signals from elements of the arrays corresponding to the same part of the scene, and the apparatus further comprises means for analysing the time sequence of signals from elements of the arrays; and means for identifying an event on the basis of the wavelength, spatial and time sequence analyses.

2. A sensor as claimed in claim I in which the detector arrays (6,7) are thermal detector arrays.

3. A sensor as claimed in claim 2, wherein the thermal detector arrays (6,7) are pyroelectric detector arrays.

4. A sensor as claimed in claims 1, 2 or 3 in which the detector arrays are mounted on, and make a plurality of mechanical and electrical interconnections to, one or more integrated circuits (8;14,20;25,28;35).

5. A sensor as claimed in any of claims 1 to 4, wherein the detector arrays are interleaved.

6. A sensor as claimed in any of claims 1 to 4, including different lenses (4,5;12,18;22,26) for focussing the scene on to the detector arrays.

7. A sensor as claimed in any of claims 1 to 4 or 6, including a beam splitter (10;21) for directing radiation to the respective arrays.

8. A sensor as claimed in claim 7 wherein the beam splitter is situated inside a sealed package with a single window (29).

9. A sensor as claimed in claim 7 or 8 in which the beam splitter is a dichroic filter.

10. A sensor as claimed in any of claims 1 to 8, wherein the differentiation between the wavelength responses of the arrays is achieved by one or more reflecting or absorbing wavelength filters (19;23).

11. A sensor as claimed in any of claims 1 to 8, wherein the detectors of the respective arrays have different intrinsic absorption characteristics.

12. A sensor as claimed in any of claims 1 to 11, wherein one or more of the detector arrays is provided with a band pass filter which transmits the infra-red emission band of a hot gas, and a secondary array is provided with an infrared filter which does not transmit the emission band of the hot gas.

13. A sensor as claimed in claim 12 including means for detecting low frequency fluctuations in the value of the ratio of signals from equivalent elements in the two arrays which do and do not respond to the emission bands of the hot gas so as to indicate the presence of one or more flames.

14. A sensor as claimed in claim 12 or 13 where the filters are selected to match the emission bands of carbon monoxide or dioxide.

15. A sensor as claimed in any of claims 1 to 11 used to detect warm or hot objects, where the two or more detector arrays have responses weighted towards shorter or longer wave-lengths whereby a high ratio of the response of an element of the former to the corresponding element of the latter indicates a hot body and a low value indicates a lower temperature body.

16. A sensor as claimed in any of the preceding claims including three or more detector arrays.

17. A method of identifying significant events in a scene using a sensor comprising two or more detector arrays which have different wavelength responses and means for focussing radiation from the same scene simultaneously onto the arrays, the method comprising the steps of:
comparing the amplitudes of signals from elements of the arrays corresponding to the same part of the scene so as to provide a wavelength analysis of radiation from the scene;
analysing the locations and spatial characteristics of events within the scene on the basis of signals from elements of the arrays;
analysing the time sequence of signals from elements of the arrays; and identifying an event on the basis of the wavelength, spatial and time sequence analyses.

18. A method as claimed in claim 17 in which said analyses are carried out in response to the occurrence of a signal above a pre-determined threshold on one or more of the elements of one or more of the arrays.

19. A method as claimed in claim 17 or 18 in which said comparison step includes determining the ratio of the signals from corresponding elements of the arrays.

20. A method as claimed in claim 17 to 19 further comprising generating a signal in response to the identification of an event.

## Patentansprüche

1. Sensor, der umfasst:
zwei oder mehr Sensoreinrichtungen (6, 7; 13, 19; 24; 27), die unterschiedliches Wellenlängen-Ansprechverhalten haben, sowie Einrichtungen (4, 5; 12,18; 22, 26; 38), die Strahlung von einer Szene gleichzeitig auf alle oder beide der Sensoreinrichtungen fokussieren;
eine Einrichtung, die die Amplitude von Signalen von Bereichen der Sensoren vergleicht, die dem gleichen Teil der Szene entsprechen, um eine Wellenlängenanalyse von Strahlung von der Szene auszuführen; und
eine Einrichtung, die die Positionen und räumlichen Eigenschaften einer Szene auf der Grundlage von Signalen von den Feldern analysiert;
**dadurch gekennzeichnet, dass** die Sensoreinrichtungen Detektorfelder umfassen, wobei die Vergleichseinrichtung die Amplitude von Signalen von Elementen der Felder, die dem gleichen Teil der Szene entsprechen, vergleicht, und die Vorrichtung des Weiteren eine Einrichtung, die die zeitliche Abfolge von Signalen von Elementen der Felder analysiert, und eine Einrichtung umfasst, die ein Ereignis auf der Grundlage der Wellenlängen-, Raum- und Zeitabfolgeanalysen identifiziert.

2. Sensor nach Anspruch 1, wobei die Detektorfelder (6, 7) Wärmedetektorfelder sind.

3. Sensor nach Anspruch 2, wobei die Wärmedetektorfelder (6, 7) pyroelektrische Detektorfelder sind.

4. Sensor nach Anspruch 1, 2 oder 3, wobei die Detektorfelder an einer oder mehreren integrierten Schaltungen (8; 14, 20; 25, 28; 35) angebracht sind und eine Vielzahl von mechanischen und elektrischen Verbindungen mit ihnen aufweisen.

5. Sensor nach einem der Ansprüche 1 bis 4, wobei die Detektorfelder verschachtelt sind.

6. Sensor nach einem der Ansprüche 1 bis 4, der verschiedene Linsen (4, 5; 12, 18; 22, 26) enthält, die die Szene auf die Detektorfelder fokussieren.

7. Sensor nach einem der Ansprüche 1 bis 4 oder 6, der einen Strahlteiler (10; 21) enthält, der Strahlung auf die entsprechenden Felder richtet.

8. Sensor nach Anspruch 7, wobei der Strahlteiler im Inneren einer gekapselten Baugruppe mit einem einzelnen Fenster (29) angeordnet ist.

9. Sensor nach Anspruch 7 oder 8, wobei es sich bei dem Strahlteiler um ein dichroitisches Filter handelt.

10. Sensor nach einem der Ansprüche 1 bis 8, wobei der Unterschied im Wellenlängen-Ansprechverhalten zwischen den Feldem mit einem oder mehreren reflektierenden oder absorbierenden Wellenlängenfiltern (19; 23) erzeugt wird.

11. Sensor nach einem der Ansprüche 1 bis 8, wobei die Detektoren der jeweiligen Felder unterschiedliche Eigenabsorptionseigenschaften haben.

12. Sensor nach einem der Ansprüche 1 bis 11, wobei eines oder mehrere der Detektorfelder mit einem Bandfilter versehen ist bzw. sind, das die Infrarot-Emissionsbande eines heißen Gases durchlässt, und ein sekundäres Feld mit einem Infrarotfilter versehen ist, das die Emissionsbande des heißen Gases nicht durchlässt.

13. Sensor nach Anspruch 12, der eine Einrichtung enthält, die niederfrequente Schwankungen im.Wert des Verhältnisses von Signalen von äquivalenten Elementen in den zwei Feldern erfasst, die auf die Emissionsbande des heißen Gases ansprechen und nicht ansprechen, um so das Vorhandensein einer oder mehrerer Flammen anzuzeigen.

14. Sensor nach Anspruch 12 oder 13, wobei die Filter so ausgewählt werden, dass sie den Emissionsbanden von Kohlenmonoxid oder Kohlendioxid entsprechen.

15. Sensor nach einem der Ansprüche 1 bis 11, der dazu dient, warme oder heiße Objekte zu erfassen, wobei die zwei oder mehr Detektorfelder Ansprechverhalten aufweisen, die in Richtung kürzerer oder längerer Wellenlängen gewichtet sind, so dass ein hohes Verhältnis des Ansprechverhaltens eines Elementes der ersten zu dem entsprechenden Element der letzteren einen heißen Körper anzeigt und ein niedriger Wert einen Körper mit niedrigerer Temperatur anzeigt.

16. Sensor nach einem der vorangehenden Ansprüche, der drei oder mehr Detektorfelder enthält.

17. Verfahren zum Identifizieren signifikanter Ereignisse in einer Szene unter Verwendung eines Sensors, der zwei oder mehr Detektorfelder, die unterschiedliche Wellenlängen-Ansprechverhalten haben, sowie Einrichtungen umfasst, die Strahlung von der gleichen Szene gleichzeitig auf die Felder fokussieren, wobei das Verfahren die folgenden Schritte umfasst:
Vergleichen der Amplitude von Signalen von Elementen der Felder, die dem gleichen Teil der Szene entsprechen, um eine Wellenlängenanalyse von Strahlung von der Szene auszuführen;
Analysieren der Positionen und räumlichen Eigenschaften von Ereignissen innerhalb der Szene auf der Grundlage von Signalen von Elementen der Felder;
Analysieren der Zeitabfolge von Signalen von Elementen der Felder; und
Identifizieren eines Ereignisses auf der Grundlage der Wellenlängen-, Raum- und Zeitabfolgeanalysen.

18. Verfahren nach Anspruch 17, wobei die Analysen in Reaktion auf das Auftreten eines Signals über einem vorgegebenen Schwellenwert an einem oder mehreren der Elemente eines oder mehrerer der Felder ausgeführt werden.

19. Verfahren nach Anspruch 17 oder 18, wobei der Vergleichsschritt das Bestimmen des Verhältnisses der Signale von entsprechenden Elementen der Felder einschließt.

20. Verfahren nach Anspruch 17 bis 19, das des Weiteren das Erzeugen eines Signals in Reaktion auf die Identifizierung eines Ereignisses umfasst.

## Revendications

1. Capteur comprenant:
deux ou plusieurs moyens de détection (6, 7; 13, 19; 24; 27) qui possèdent des réponses à des longueurs d'onde différentes et des moyens (4, 5; 12, 18; 22, 26; 38) pour focaliser un rayonnement provenant d'une scène simultanément sur la totalité des moyens de détection ou sur les deux moyens de détection;
des moyens pour comparer l'amplitude de signaux provenant de zones des capteurs correspondant à la même partie de la scène de manière à fournir une analyse des longueurs d'onde de rayonnement provenant de la scène; et
des moyens pour analyser les emplacements et les caractéristiques spatiales d'une scène sur la base de signaux provenant des réseaux;
**caractérisé en ce que** les moyens de détection comprennent des réseaux de détection, lesdits moyens comparateurs comparent l'amplitude de signaux provenant d'éléments des réseaux correspondant à la même partie de la scène, et le dispositif comprend en outre des moyens pour analyser la séquence temporelle de signaux provenant d'éléments des réseaux; et des moyens pour identifier un événement sur la base d'une analyse des longueurs d'onde, d'une analyse spatiale et d'une analyse de séquence spatiale et une analyse de séquence temporelle.

2. Capteur selon la revendication 1, dans lequel les réseaux de détecteurs (6, 7) sont des réseaux de détecteurs thermiques.

3. Capteur selon la revendication 2, dans lequel les réseaux de détecteurs thermiques (6, 7) sont des réseaux de détecteurs pyroélectriques.

4. Capteur selon la revendication 1, 2 ou 3, dans lequel les réseaux de détecteurs sont montés sur un ou plusieurs circuits intégrés (8, 14, 20; 25, 28; 35) et établissent une pluralité d'interconnexions mécaniques et électriques avec ce ou ces circuits.

5. Capteur selon l'une quelconque des revendications 1 à 4, dans lequel les réseaux de détecteurs sont imbriqués.

6. Capteur selon l'une quelconque des revendications 1 à 4, incluant différentes lentilles (4, 5; 12, 18; 22, 26) servant à focaliser la scène sur les réseaux de détecteurs.

7. Capteur selon l'une quelconque des revendications 1 à 4, incluant un diviseur de faisceau (10, 21) pour diriger un rayonnement sur les réseaux respectifs.

8. Capteur selon la revendication 7, dans lequel le diviseur de faisceau est situé à l'intérieur d'un boîtier fermé de façon étanche comportant une seule fenêtre (29).

9. Capteur selon la revendication 7 ou 8, dans lequel le diviseur de faisceau est un filtre dichroïque.

10. Capteur selon l'une quelconque des revendications 1 à 8, dans lequel la différentiation entre les réponses de longueurs d'onde des réseaux est obtenue à l'aide d'un ou de plusieurs filtres de longueur d'onde réalisant une réflexion ou une absorption (19; 23).

11. Capteur selon l'une quelconque des revendications 1 à 8, dans lequel les détecteurs des réseaux respectifs possèdent différentes caractéristiques d'absorption intrinsèques.

12. Capteur selon l'une quelconque des revendications 1 à 11, dans lequel un ou plusieurs des réseaux de détecteurs est pourvu d'un filtre passe-bande qui transmet la bande d'émission infrarouge d'un gaz chaud, et d'un réseau secondaire est équipé d'un filtre à infrarouge, qui ne transmet pas la bande d'émission du gaz chaud.

13. Capteur selon la revendication 12, comprenant des moyens pour détecter de faibles fluctuations de fréquence de la valeur du rapport de signaux provenant d'éléments équivalents dans les deux réseaux, qui répondent et qui ne répondent pas aux bandes d'émission du gaz chaud de manière à indiquer la présence d'une ou de plusieurs flammes.

14. Capteur selon la revendication 12 ou 13, dans lequel les filtres sont choisis de manière à correspondre aux bandes d'émission du monoxyde de carbone ou du gaz carbonique.

15. Capteur selon l'une quelconque des revendications 1 à 11, utilisé pour détecter des objets chauds ou brûlants, dans lequel deux ou plusieurs réseaux de détecteurs ont des réponses pondérées vers des longueurs d'onde plus courtes ou plus longues, ce qui a pour effet qu'un rapport élevé de la réponse d'un élément du premier réseau à celle de l'élément correspondant du second réseau indique un corps chaud et une faible valeur indique un corps à température plus faible.

16. Capteur selon l'une quelconque des revendications précédentes, comprenant trois ou plus de trois réseaux de détecteurs.

17. Procédé pour identifier des évènements importants dans une scène moyennant l'utilisation d'un capteur, comprenant deux ou plus de deux réseaux de détecteurs qui ont des réponses à des longueurs d'onde différentes, et des moyens pour focaliser le rayonnement provenant de la même scène simultanément sur les réseaux, le procédé comprenant les étapes consistant à:
comparer les amplitudes de signaux provenant d'éléments des réseaux correspondant à la même partie de la scène de manière à fournir une analyse des longueurs d'onde de rayonnement provenant de la scène;
analyser les emplacements et les caractéristiques spectrales d'évènements dans la scène sur la base de signaux provenant d'éléments des réseaux;
analyser la séquence temporelle de signaux provenant d'éléments des réseaux; et
identifier un événement sur la base de l'analyse de longueurs d'onde, de l'analyse spatiale et de l'analyse de la séquence temporelle.

18. Procédé selon la revendication 17, selon lequel lesdites analyses sont exécutées en réponse à l'apparition d'un signal au-dessus d'un seuil prédéterminé dans un ou plusieurs des éléments d'un ou de plusieurs des réseaux.

19. Procédé selon la revendication 17 ou 18, dans lequel ladite étape de comparaison inclut la détermination du rapport des signaux provenant d'éléments correspondants des réseaux.

20. Procédé selon les revendications 17 à 19, comprenant en outre la production d'un signal en réponse à l'identification d'un événement.
